# EUROPEAN PATENT APPLICATION

(11) **EP 2 873 717 A1**
(43) Date of publication of application: **20.05.2015**
(21) Application number: 13816581.6
(22) Date of filing: 11.07.2013
(51) Int. Cl.: C10M 137/10, C10M 101/02, C10M 129/76, C10M 169/04, C10N 30/06, C10N 40/06

(54) **LUBRICATING OIL COMPOSITION FOR SHOCK ABSORBER**

(30) Priority: 12.07.2012 JP 2012156370
(71) Applicant: Idemitsu Kosan Co., Ltd, Tokyo 100-8321 (JP)
(72) Inventor: SAKANOUE, Shuichi, Ichihara-shi Chiba 299-0107 (JP); AOKI, Aya, Ichihara-shi Chiba 299-0107 (JP)
(74) Representative: Hoffmann Eitle
(86) International application number: PCT/JP2013/069032
(87) International publication number: WO 2014/010697

(57) **Abstract**

To provide a shock absorber lubricating oil composition which realizes such a lubricity between rubber and chromium; i.e., materials generally employed in oil seals and piston rods of shock absorbers, that the low-speed-side friction coefficient is low; the high-speed-side friction coefficient is high; and the ratio of the low-speed-side friction coefficient to the high-speed-side friction coefficient is small.

The shock absorber lubricating oil composition includes (A) a base oil composed of a mineral oil and/or a synthetic oil, and (B) a dithiophosphate ester represented by formula (1).

## Description

### Technical Field

The present invention relates to a lubricating oil composition for a shock absorber, which hereinafter may be referred to as a "shock absorber lubricating oil composition." More specifically, the present invention relates to a lubricating oil composition for a shock absorber mainly used at a sliding part between an oil seal and a piston rod in a shock-absorber of a four-wheeled vehicle.

### Background Art

Lubricating oil for shock absorbers in automobiles is employed mainly for damping vibration in order to attain optimum attenuation force for maintaining driving stability. Generally, shock absorbers are disposed in an automobile between the car body and the tires and attenuate vibration of the car body caused by bumps of a road, jolting generated at quick acceleration or heavy braking, and other motions.

Generally, a shock absorber is arranged not in a direction orthogonal to the road but is slanted from the orthogonal direction, since the slant arrangement provides more excellent riding comfort. Thus, during expansion and contraction of a shock absorber, large lateral force attributed to a generated bending moment is applied to the shock absorber. In order to facilitate expansion and contraction of the shock absorber under application of lateral force, a shock absorber oil (shock absorber fluid: SAF) is required to reduce friction of a bearing (guide bush).

Hitherto, lubricating oils for shock absorbers in automobiles have exhibited enhanced vibration damping effect through reducing the friction at a sliding interface between an oil seal and a piston rod, a piston rod and a guide bush, a piston band and a cylinder, etc. in a shock absorber (see, for example, Patent Documents 1 and 2).

During automobile driving at a speed of 100 to 200 km/h, when the driver turns the steering wheel for changing lanes, the tires suffers unstable rolling, which reduces vehicle stability. In such a case, a longer distance is required for preventing an accident. Such problems are thought to be caused by insufficient attenuation force of a shock absorber under micro-vibration. The attenuation force correlates with friction at sliding parts between an oil seal and a piston rod, a piston band and a cylinder, and the like, which generate attenuation force under micro-vibration.

Patent Document 3 discloses a lubricating oil composition for an automobile shock absorber proposed for solving the above problems. The lubricating oil composition provides a sliding part; e.g., an oil seal-piston rod part or a piston band-cylinder part, with enhanced friction characteristics. The disclosed lubricating oil composition is obtained by blending (A) an amine salt of an acidic phosphate monoester, (B) a polyalkenylsuccinimide, and (C) an acidic phosphite diester with a lube base oil. However, when friction characteristics are enhanced, chattering noise attributed to rubber tends to generate.

Thus, demand has arisen for a shock absorber lubricating oil composition which is not likely to generate rubber-originating chattering noise under micro-vibration of a shock absorber and which attains sufficient attenuation force of the shock absorber. The oil seal is a rubber product and the piston rod has a surface of chromium material, and the aforementioned friction is particularly problematic between rubber and chromium.

### Prior Art Documents

### Patent Documents

Patent Document 1: Japanese Patent Application Laid-Open (*kokai*) No. Hei 5-255683
Patent Document 2: Japanese Patent Application Laid-Open (*kokai*) No. 2000-192067
Patent Document 3: Japanese Patent Application Laid-Open (*kokai*) No. 2003-147379

### Summary of the Invention

### Problems to be Solved by the Invention

Under such circumstances, an object of the present invention is to provide a shock absorber lubricating oil composition which realizes such a lubricity between rubber and chromium; i.e., materials generally employed in oil seals and piston rods of shock absorbers, such that the low-speed-side friction coefficient is low; the high-speed-side friction coefficient is high; and the ratio of the low-speed-side friction coefficient to the high-speed-side friction coefficient is small.

### Means for Solving the Problems

The present inventors have conducted extensive studies in order to develop a lubrication oil composition which can solve the aforementioned problems, and have found that the aforementioned object can be attained through incorporation of a dithiophosphate ester having a specific structure into a specific base oil. The present invention has been accomplished on the basis of this finding.

Accordingly, the present invention provides the following [1] to [8].
[1] A lubricating oil composition for a shock absorber, comprising:
   (A) a base oil composed of a mineral oil and/or a synthetic oil and;
   (B) a dithiophosphate ester represented by the following formula (1): 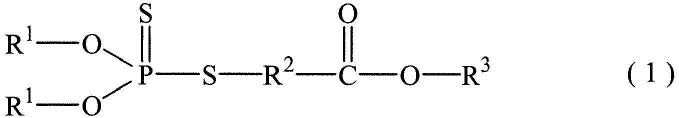
   (wherein R¹ independently represents a C1 to C8 alkyl group; R² represents a C1 to C8 alkylene group; and R³ represents a C1 to C8 alkyl group).
[2] A lubricating oil composition for a shock absorber as described in [1] above, wherein, in the component (B), R¹ is an isopropyl group, R² is a C1 to C5 alkylene group, and R³ is a C1 to C5 alkyl group.
[3] A lubricating oil composition for a shock absorber as described in [1] or [2] above, wherein the component (B) is ethyl 3-{[bis(1-methylethoxy)phosphinothioyl]thio}propionate.
[4] A lubricating oil composition for a shock absorber as described in any of [1] to [3] above, which has a component (B) content of 0.01 mass% or more and 5 mass% or less, with respect to the entire amount of the composition.
[5] A lubricating oil composition for a shock absorber as described in any of [1] to [4] above, which further comprises (C) a polyhydric alcohol partial ester in an amount of 0.1 mass% or more and 5 mass% or less, with respect to the entire amount of the composition.
[6] A lubricating oil composition for a shock absorber as described in [5] above, wherein the component (C) is pentaerythritol diolate.
[7] A lubricating oil composition for a shock absorber as described in any of [1] to [6] above, which further comprises (D) a phosphorus-containing compound in an amount of 0.1 mass% or more and 5 mass% or less, with respect to the entire amount of the composition.
[8] A lubricating oil composition for a shock absorber as described in [7] above, wherein the component (D) is zinc dithiophosphate (ZnDTP).

### Effects of the Invention

The present invention enables provision of a shock absorber lubricating oil composition which realizes such a lubricity between rubber and chromium; i.e., a material generally employed in oil seals and piston rods of shock absorbers, such that the low-speed-side friction coefficient is low; the high-speed-side friction coefficient is high; and the ratio of the low-speed-side friction coefficient to the high-speed-side friction coefficient is small. Particularly, through employment of the shock absorber lubricating oil composition of the present invention, shock absorbers can smoothly work and attain considerable attenuation force, under micro-vibration of a shock absorber (e.g., changing lanes of a highway). Thus, high stability in driving and excellent car driving comfort can be provided.

### Brief Description of the Drawings

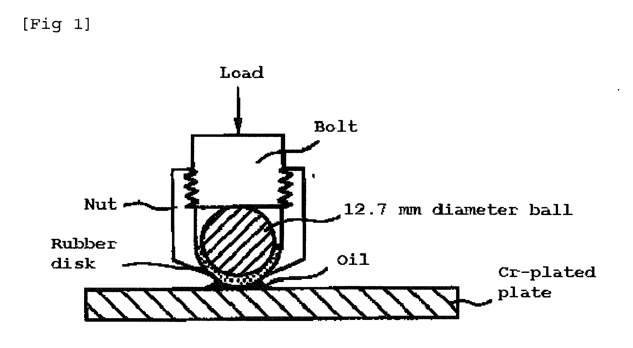

[Fig. 1] Fig 1 is a schematic view showing the measurement of friction coefficient between rubber and chromium.

### Modes for Carrying Out the Invention

The shock absorber lubricating oil composition of the present invention includes (A) a base oil composed of a mineral oil and/or a synthetic oil (hereinafter may be referred to simply as "component (A)") and; (B) a dithiophosphate ester represented by the following formula (1) (hereinafter may be referred to simply as "component (B)").

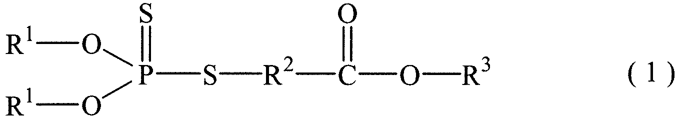

### <(A) Base oil>

The base oil (A) of the lubricating oil composition of the present invention is a mineral oil and/or a synthetic oil. No particular limitation is imposed on the type of the mineral oil or synthetic oil. Examples of the mineral oil include paraffin-based mineral oil, intermediate mineral oil, and naphthene-based mineral oil, which are produced through a routine refining method such as solvent refining or hydrogenation refining.

Examples of the synthetic oil include polybutene, polyolefins [e.g., α-olefin (co)polymers], esters (e.g., polyol-esters, dibasic acid esters, and phosphoric acid esters), and ethers (e.g., polyphenyl ether), alkylbenzenes, and alkylnaphthalenes.

In the present invention, the mineral oil may be used, as the base oil, singly or in combination of two or more species. Also, the synthetic oil may be used, as the base oil, singly or in combination of two or more species. Furthermore, one or more mineral oils may be combined with one or more synthetic oils.

Among these oils, mineral oils, particularly paraffin-based mineral oils; α-olefin polymers, such as 1-decene oligomers; and mixtures thereof are preferably employed.

The lubricating oil composition of the present invention is mainly employed as an automobile shock absorber oil. Thus, the viscosity of the base oil is preferably within the range of 2 to 20 mm²/s, more preferably 3 to 15 mm²/s, and still more preferably 4 to 10 mm²/s in terms of kinematic viscosity at 40°C.

No particular limitation is imposed on the viscosity index of the base oil, but it is preferably 95 or higher, more preferably 100 or higher, still more preferably 105 or higher. In the case where a plurality of base oils are used in combination, properties of the base oils including viscosity index mean those of the base oil mixture.

The base oil preferably has a flash point of 150°C or higher, more preferably 155°C or higher. When the flash point of the base oil is 150°C or higher, foaming is suppressed in use of the oil composition, which may enhance riding comfort.

Therefore, it is not preferred to use a base oil to which an excessive amount of low-viscosity base has been added for the purpose of enhancement of low-temperature flowability.

In the present invention, the flash point is generally measured through JIS K2265 (COC method).

No particular limitation is imposed on the component (A) content of the lubricating oil composition of the present invention. For example, the component (A) content is preferably 50 mass% or more and 99.9 mass% or less, with respect to the total amount of the composition, more preferably 70 mass% or more and 99.8 mass% or less, still more preferably 80 mass% or more and 99.7 mass% or less.

### <(B) Dithiophosphate ester>

The dithiophosphate ester (B) contained in the lubricating oil composition of the present invention is represented by the following formula (1).

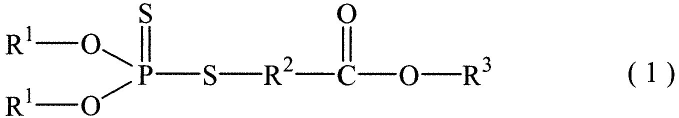

In formula (1), R¹ independently represents a C1 to C8 alkyl group; R² represents a C1 to C8 alkylene group; and R³ represents a C1 to C8 alkyl group.

Each of the alkyl groups represented by R¹ is preferably C1 to C5, more preferably C2 to C4, still more preferably C2 to C3. The alkyl group may be linear-chain or branched-chain.

Specific examples of the alkyl group represented by R¹ include methyl, ethyl, n-propyl, isopropyl, n-butyl, isobutyl, tert-butyl, pentyl, hexyl, and octyl. Of these, isopropyl is preferred.

The alkylene group represented by R² is preferably C1 to C5, more preferably C1 to C4, still more preferably C2 to C3. The alkylene group may be linear-chain or branched-chain. Specific examples of the alkylene group represented by R² include methylene, ethylene, propylene, butylene, pentylene, hexylene, and octylene. Of these, ethylene and propylene are preferred.

The alkyl group represented by R³ is preferably C1 to C5, more preferably C2 to C4, still more preferably C2 to C3. The alkyl group may be linear-chain or branched-chain.

Specific examples of the alkyl group represented by R³ include methyl, ethyl, n-propyl, isopropyl, n-butyl, isobutyl, tert-butyl, pentyl, hexyl, and octyl. Of these, ethyl and n-butyl are preferred. From the viewpoint of enhancement in high-speed-side friction coefficient, ethyl is more preferred.

Among dithiophosphate esters represented by formula (1), dithiophosphate esters in which R¹ is an isopropyl group, R² is a C1 to C5 alkylene group, and R³ is a C1 to C5 alkyl group are preferred.

Among these dithiophosphate esters, ethyl 3-{[bis(1-methylethoxy)phosphinothioyl]thio}propionate [a compound represented by the following formula (1-1)] and butyl 3-{[bis(1-methylethoxy)phosphinothioyl]thio}propionate [a compound represented by the following formula (1-2)] are more preferred, with ethyl 3-{[bis(1-methylethoxy)phosphinothioyl]thio}propionate [formula (1-1)] being still more preferred.

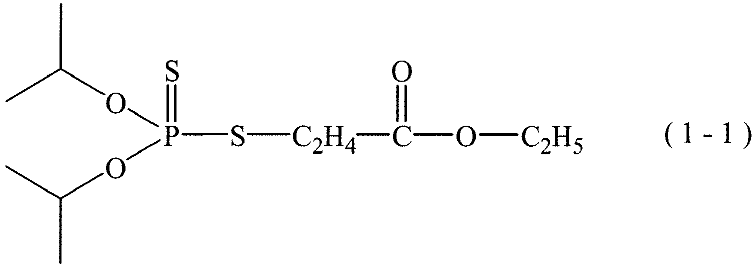

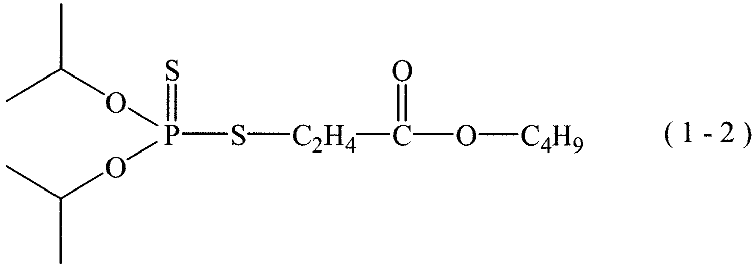

Dithiophosphate esters represented by formula (1) are known compounds, and production methods therefor are also known. For example, these compounds may be produced through a method as disclosed in US Patent No. 5,362,419.

No particular limitation is imposed on the component (B) content of the lubricating agent composition of the present invention. For example, the component (B) content is preferably 0.01 mass% or more and 5 mass% or less, with respect to the entire amount of the composition, more preferably 0.05 mass% or more and 3 mass% or less, still more preferably 0.1 mass% or more and 1 mass% or less.

### <(C) Polyhydric alcohol partial ester>

The lubricating oil composition of the present invention preferably contains (C) a polyhydric alcohol partial ester (hereinafter may be referred to simply as "component (C)"). Through incorporation of the polyhydric alcohol partial ester, an additional effect can be further attained in the present invention. That is, the composition can provide low friction coefficient between bronze and chromium; i.e., a material generally employed in guide bush and piston rods, and reduce the piston rod/guide bush friction coefficient of a shock absorber.

The polyhydric alcohol partial ester is preferably has a C10 to C20 fatty acid residue. As used herein, the term "fatty acid residue" refers to a residue formed through removal of a carboxyl group from a fatty acid.

No particular limitation is imposed on the fatty acid residue, and the residue may be branched or linear-chain, or may be an unsaturated aliphatic hydrocarbon residue or a saturated aliphatic hydrocarbon residue. Specific examples of the fatty acid residue include decyl, lauryl, palmityl, stearyl, and oleyl.

Examples of the polyhydric alcohol include dihydric alcohols, such as ethylene glycol, diethylene glycol, propylene glycol, and dipropylene glycol; trihydric alcohols, such as glycerin, trimethylolethane, trimethylolpropane, trimethylolbutane, 1,3,5-pentanetriol, 1,2,4-butanetriol, 1,2,6-hexanetriol; tetrahydric alcohols, such as pentaerythritol, 1,2,3,4-butanetetrol, and sorbitan; and polyhydric alcohols, such as adonitol, arabitol, xylytol, sorbitol, and mannitol.

No particular limitation is imposed on the valency of the polyhydric alcohol, but the number of hydroxyl groups is preferably 3 or more, more preferably 4.

The polyhydric alcohol preferably has 1 to 3 ester substituted sites, more preferably 2 to 3 ester substituted sites.

The polyhydric alcohol partial ester preferably has 2 or more hydroxyl groups.

Specific examples of preferred polyhydric alcohol partial esters include pentaerythritol diolate, pentaerythritol dilaurate, pentaerythritol distearate, and monooleyl glyceride. Of these, pentaerythritol diolate, pentaerythritol dilaurate, and monooleyl glyceride are more preferred.

The component (C) content of the lubricating oil composition of the present invention is preferably 0.05 mass% or more and 10 mass% or less, with respect to the total amount of the composition, more preferably 0.2 mass% or more and 4 mass% or less, still more preferably 0.3 mass% or more and 3 mass% or less, from the viewpoint of reducing the piston rod/guide bush friction coefficient.

### <(D) Phosphorus-containing compound>

The lubricating oil composition of the present invention preferably contains (D) a phosphorus-containing compound (hereinafter may be referred to simply as "component (D)"). The phosphorus-containing compound exerts synergistically with polyhydric alcohol partial ester (C), to thereby provide considerably enhanced wear resistance.

Examples of the phosphorus-containing compound (D) include phospho-ester compounds such as a phosphate ester, an acidic phosphate monoester amine salt, and an acidic phosphite diester, and zinc dithiophosphate (ZnDTP).

The lubricating oil composition of the present invention preferably contains, as a phosphorus-containing compound among them, ZnDTP having a C7 to C12 alkyl group. Examples of the ZnDTP includes compounds represented by the following formula (D1) 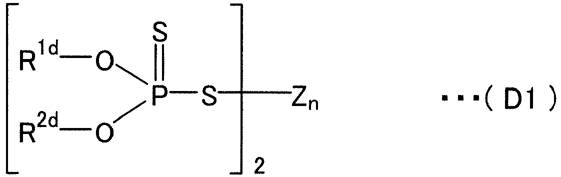 (wherein each of R^{1d} and R^{2d} represents a C7 to C12 linear-chain, branched, or cyclic alkyl group).

Specific examples of the alkyl group R^{1d} or R^{2d} in formula (D1) include heptyl, isoheptyl, cyclohexylmethyl, octyl, 2-ethylhexyl, isooctyl, cyclooctyl, nonyl, isononyl, 3,5,5-trimethylhexyl, cyclooctylmethyl, decyl, 3,7-dimethyloctyl, 2-propylheptyl, isodecyl, undecyl, dodecyl, 2-butyloctyl, and isododecyl. Among them, C7 to C10 alkyl groups are more preferred.

R^{1d} and R^{2d} may be identical to or different from each other. However, they are preferably the same group, from the viewpoint of easiness of production.

Examples of the phosphate ester compound include an acidic phosphoric acid monoester amine salt formed from an acidic phosphoric acid monoester having a C1 to C8 alkyl or alkenyl group; e.g., monomethyl hydrogenphosphate or monoethyl hydrogenphosphate, and an amine compound having a C8 to C20 alkyl or alkenyl group.

The lubricating oil composition of the present invention preferably has a component (D) content; i.e., a phosphorus-containing compound content, of 0.3 to 2 mass%, with respect to the total amount of the composition, more preferably 0.5 to 1.5 mass%.

### <Other optional components>

So long as the object of the present invention is not impaired, the shock absorber oil of the present invention may appropriately contain, as an optional additive, at least one species selected from among an ashless detergent-dispersant, a metallic detergent, a lubrication improver, an antioxidant, a rust preventive, a metal deactivator, a viscosity index improver, a pour point depressant, and a defoaming agent. No particular limitation is imposed on the optional components, and the amounts of these components are preferably 0.1 to 20 mass%, with respect to the total amount of the composition, more preferably 0.3 to 10 mass%, still more preferably 0.3 to 5 mass%.

Examples of the ashless detergent-dispersant include divalent carboxamides, such as a succinimide, a boron-containing succinimide, a benzylamine, a boron-containing benzylamine, and succinic acid. Examples of the metallic detergent include a neutral metal sulfonate, a neutral metal phenate, a neutral metal salicylate, a neutral metal phosphonate, a basic sulfonate, a basic phenate, a basic salicylate, a perbasic sulfonate, a perbasic salicylate, and a perbasic phosphonate.

Examples of the type of the lubrication improver include an extreme pressure agent, an antiwear agent, and an oiliness agent, and examples of the material of the lubrication improver include organometallic compounds, such as zinc dithiocarbamate (ZnDTC), oxysulfidomolybdenum organophosphorodithioate (MoDTP), and oxysulfidomolybdenum dithiocarbamate (MoDTC).

Examples of the sulfur-containing extreme pressure agent include sulfurized oils, sulfurized fatty acids, sulfurized esters, sulfurized olefins, dihydrocarbyl polysulfide, thiadiazole compounds, alkylthiocarbamoyl compounds, triazine compounds, thioterpene compounds, and dialkylthio dipropionate compounds.

Examples of the oiliness agent include aliphatic saturated and unsaturated monocarboxylic acids, such as stearic acid and oleic acid; polymerized fatty acids, such as dimer acid and hydrogenated dimer acid; hydroxy fatty acids, such as ricinoleic acid and 12-hydroxystearic acid; aliphatic saturated and unsaturated monoalcohols, such as lauryl alcohol and oleyl alcohol; aliphatic saturated and unsaturated monoamines, such as stearylamine and oleylamine; and aliphatic saturated and unsaturated monocarboxamides, such as lauriamide and oleamide.

Examples of the antioxidant include polycyclic phenol-based antioxidants, such as 4,4'-methylenebis(2,6-di-tert-butylphenol) and 2,2'-methylenebis(4-ethyl-6-tert-butylphenol); amine-based antioxidants, such as monoalkyldiphenylamine compounds; e.g., monooctyldiphenylamine and monononyldiphenylamine, dialkyldiphenylamine compounds; e.g., 4,4'-dibutyldiphenylamine, 4,4'-dipentyldiphenylamine, 4,4'-dihexyldiphenylamine, 4,4'-diheptyldiphenylamine, 4,4'-dioctyldiphenylamine, and 4,4'-dinonyldiphenylamine, polyalkyldiphenylamine compounds; e.g., tetrabutyldiphenylamine, tetrahexyldiphenylamine, tetraoctyldiphenylamine, and tetranonyldiphenylamine, and naphthylamine compounds; e.g., α-naphthylamine, phenyl-α-naphthylamine, butylphenyl-α-naphthylamine, pentylphenyl-α-naphthylamine, hexylphenyl-α-naphthylamine, heptylphenyl-α-naphthylamine, octylphenyl-α-naphthylamine, and nonylphenyl-α-naphthylamine; and sulfur-containing antioxidants such as thioterpene compounds; e.g., 2,6-di-tert-butyl-4-(4,6-bis(octylthio)-1,3,5-triazin-2-ylamino)phenol and a reaction product between phosphorus pentasulfide and pinene, and dialkyl thiodipropionates; e.g., dilauryl thiodipropionate and distearyl thiodipropionate.

Examples of the rust preventive include metal sulfonates and succinate esters. Examples of the metal deactivator include benzotriazole and thiadiazole.

Examples of the viscosity index improver include polymethacrylates, dispersed polymethacrylates, olefin copolymers (e.g., ethylene-propylene copolymer), dispersed olefin copolymers, and styrene copolymers such as (e.g., styrene-diene hydrogenated copolymer).

Examples of the pour point depressant which may be used in the invention include polymethacrylates having a mass average molecular weight of about 50,000 to about 150,000.

The defoaming agent is preferably a silicone polymer-based defoaming agent. Through incorporation of the silicone polymer-based defoaming agent, defoaming performance can be effectively attained, whereby riding comfort can be improved.

Examples of the silicone polymer-based defoaming agent include organopolysiloxanes. Among them, fluorine-containing organopolysiloxanes such as trifluoropropylmethylsilicone oil are particularly preferred.

The shock absorber lubricating oil composition of the present invention preferably exhibits the following friction characteristics.

The low-speed-side rubber friction coefficient (hereinafter may be referred to as "µ₁") is preferably 0.04 or more and 0.13 or less, more preferably 0.05 or more and 0.10 or less, still more preferably 0.06 or more and 0.08 or less, from the viewpoint of preventing chattering noise attributed to rubber. As used herein, the term "low-speed-side rubber friction coefficient" refers to a friction coefficient between rubber and chromium at a sliding speed of 1 mm/s as determined through the method disclosed in "Examples."

The high-speed-side rubber friction coefficient (hereinafter may be referred to as "µ₂") is preferably 0.06 or more and 0.15 or less, more preferably 0.07 or more and 0.13 or less, still more preferably 0.09 or more and 0.10 or less, from the viewpoint of attaining sufficient attenuation force of a shock absorber under small stretching motion. As used herein, the term "high-speed-side rubber friction coefficient" refers to a friction coefficient between rubber and chromium at a sliding speed of 15 mm/s as determined through the method disclosed in "Examples."

The aforementioned ratio of the low-speed-side friction coefficient to the high-speed-side friction coefficient (µ₁/µ₂) is preferably 0.8 or less, more preferably 0.10 or more and 0.70 or less, still more preferably 0.30 or more and 0.70 or less, from the viewpoints of prevention of chattering noise attributed to rubber and attaining sufficient attenuation force of a shock absorber under small stretching motion.

The bronze friction coefficient is preferably 0.05 or more and 0.18 or less, more preferably 0.08 or more and 0.17 or less, still more preferably 0.10 or more and 0.15 or less, from the viewpoint of reducing friction coefficient between a piston rod and a guide bush. As used herein, the term "bronze friction coefficient" refers to a friction coefficient between bronze and chromium as determined through the method disclosed in "Examples."

The lubricating oil composition of the present invention may be applied to any of a multi-cylinder shock absorber and a single-cylinder shock absorber, and shock absorbers of a four-wheeled vehicle or a two-wheeled vehicle. The composition of the present invention is particularly suitably used in four-wheeled vehicles.

The lubricating oil composition of the present invention exhibits a small low-speed-side friction coefficient and a great high-speed-side friction coefficient particularly between rubber and chromium. Therefore, the composition of the invention is preferably used as a lubricating agent of a shock absorber including an oil seal at least made of rubber, and a piston rod at least having a sliding part made of chromium (e.g., chromium plating), which part comes into contact with the oil seal.

Also, through incorporation of component (C) into the lubricating oil composition of the present invention which exhibits a small low-speed-side friction coefficient, the friction coefficient between bronze and chromium is reduced. Therefore, the composition of the invention is preferably used as a lubricating agent of a shock absorber including a guide bush at least having an inner surface made of bronze, and a piston rod at least having a sliding part made of chromium (e.g., chromium plating), which part comes into contact with the guide bush.

Conceivably, the lubricating oil composition of the present invention effectively serves as an industrial hydraulic fluid, a hydraulic fluid for construction machinery, or a similar hydraulic fluid.

### Examples

The present invention will next be described in more detail by way of examples, which should not be construed as limiting the invention thereto.

Friction coefficients were measured through the following procedures.

### (1) Measurement of rubber friction coefficient

Tester: Bowden-type reciprocating kinetic friction tester
Test conditions:
   Load: 2 kgf
   Stroke: 10 mm
   Speed: 1 mm/s or 15 mm/s
   Temperature: 80°C
   Friction operation: once
   Friction members
   Upper friction member: rubber (A727)
   Lower friction member: chromium-plated sheet
   (50 x 1,000 x 5 mm)

In a specific procedure, the rubber plate was prepared by cutting a rubber plate into disks having a diameter of 15 mm. As shown in Fig. 1, a ball having a diameter of 12.7 mm was pressed against the rubber plate, and an oil composition sample was supplied to the sheet, in an amount corresponding to several drops. The ball was conditioned on the plate (8 mm/s, 0.1 kgf for 2 minutes, 0.2 kgf for 2 minutes, 0.3 kgf for 2 minutes, and 0.5 kgf for 2 minutes). The friction test was carried out at a speed of 1 mm/s (low speed side) or a speed of 15 mm/s (high speed side). In Table 1, the friction coefficients measured at 1 mm/s are represented by "Rubber µ₁," and the friction coefficients measured at 15 mm/s are represented by "Rubber µ₂."

### (2) Measurement of bronze friction coefficient

Tester: Bowden-type reciprocating kinetic friction tester
Test conditions:
   Load: 0.5 kgf
   Stroke: 10 mm
   Speed: 2 mm/s
   Temperature: 80°C
   Friction operation: once
   Friction members
   Upper friction member: phosphor bronze ball
   Lower friction member: chromium-plated sheet
   (50 x 1,000 x 5 mm)

In a specific procedure, a 1/2-inch phosphor bronze was used. An oil composition sample was supplied to the sheet, in an amount corresponding to several drops. The ball was conditioned on the plate (8 mm/s, 0.1 kgf for 2 minutes, 0.2 kgf for 2 minutes, 0.3 kgf for 2 minutes, and 0.5 kgf for 2 minutes). Thereafter, the friction test was performed at 2 mm/s. In Table 1, the measured friction coefficients are represented by "Bronze µ."

### Examples 1 and 2, and Comparative Examples 1 to 4

Shock absorber lubricating oil compositions (shock absorber oils) containing the components given in Table 1 were prepared. Each composition was subjected to the friction coefficient measurement. Table 1 shows the results.

[Table 1]

**Table 1**

| Examples/Comparative Examples | | | Ex. 1 | Ex. 2 | Comp. Ex. 1 | Comp. Ex. 2 | Comp. Ex. 3 | Comp. Ex. 4 |
|---|---|---|---|---|---|---|---|---|
| Component (parts by mass) | (A) | Base oil (mineral oil) | 96.198 | 96.198 | 96.398 | 97.748 | 94.068 | 93.468 |
| | (B) | Compound (1-1) | 0.200 | | | | | |
| | | Compound (1-2) | | 0.200 | | | | |
| | (C) | Pentaerythritol dioleate | 0.750 | 0.750 | 0.750 | | 3.000 | |
| | | Monooleyl glyceride | 0.500 | 0.500 | 0.500 | | 0.300 | |
| | (D) | Zn-DTP (1) | 0.800 | 0.800 | 0.800 | 0.800 | | |
| | | Zn-DTP (2) | | | | | 0.800 | |
| | Other additives | | 1.552 | 1.552 | 1.552 | 1.452 | 1.832 | 6.532 |
| Test results | | Rubber µ₁ (speed: 1 mm/s) | 0.062 | 0.062 | 0.065 | 0.132 | 0.039 | 0.021 |
| | | Rubber µ₂ (speed: 15 mm/s) | 0.092 | 0.090 | 0.078 | 0.170 | 0.065 | 0.042 |
| | | Rubber µ ratio ^{*1} | 0.674 | 0.689 | 0.833 | 0.776 | 0.600 | 0.508 |
| | | Bronze µ | 0.142 | 0.140 | 0.138 | 0.189 | 0.169 | 0.148 |

| | | | | | | | | |
|---|---|---|---|---|---|---|---|---|
| *1: Rubber µ ratio = Rubber µ₁/Rubber µ₂ | | | | | | | | |

The components used in the Examples and Comparative Examples shown in Table 1 are as follows.
Base oil: 40°C kinematic viscosity = 9.07 mm²/s, viscosity index = 109, and density (15°C) = 0.828 g/cm³
Compound of formula (1-1): ethyl 3-{[bis(1-methylethoxy)phosphinothioyl]thio}propionate
Compound of formula (1-2): butyl 3-{[bis(1-methylethoxy)phosphinothioyl]thio}propionate
Zn-DTP (1): primary, C6 alkyl
Zn-DTP (2): primary, C8 alkyl
Other additives: a mixture of aliphatic carboxamide, calcium sulfonate, polymethacrylate, etc.

In comparison of Comparative Example 1 with Comparative Example 2, the bronze friction coefficient was found to be considerably reduced through incorporation of component (C) into the composition. In comparison of Comparative Example 1 with Examples 1 and 2, rubber µ ratio was found to be considerably reduced through incorporation of component (B) into the composition. Furthermore, bronze friction coefficient was maintained at a low level even when component (B) had been incorporated into the composition. Consequently, through employment of component (B) and component (C) in combination, both low rubber µ ratio and low bronze friction coefficient can be attained. In comparison of Comparative Examples 3 and 4 with Examples 1 and 2, high-speed side rubber friction coefficient was found to increase.

### Industrial Applicability

The lubricating oil composition of the present invention can be used for automobile shock absorbers. The composition is applicable to both four-wheeled vehicles and two-wheeled vehicles.

## Claims

1. A lubricating oil composition for a shock absorber, comprising:
(A) a base oil composed of a mineral oil and/or a synthetic oil and;
(B) a dithiophosphate ester represented by the following formula (1): 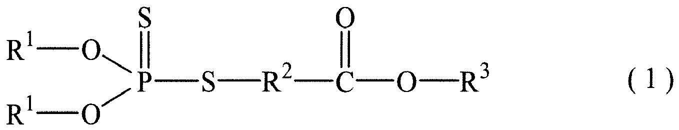
(wherein R¹ independently represents a C1 to C8 alkyl group; R² represents a C1 to C8 alkylene group; and R³ represents a C1 to C8 alkyl group).

2. A lubricating oil composition for a shock absorber according to claim 1, wherein, in the component (B), R¹ is an isopropyl group, R² is a C1 to C5 alkylene group, and R³ is a C1 to C5 alkyl group.

3. A lubricating oil composition for a shock absorber according to claim 1 or 2, wherein the component (B) is ethyl 3-{[bis(1-methylethoxy)phosphinothioyl]thio}propionate.

4. A shock absorber lubricating oil composition according to any of claims 1 to 3, which has a component (B) content of 0.01 mass% or more and 5 mass% or less, with respect to the entire amount of the composition.

5. A lubricating oil composition for a shock absorber according to any of claims 1 to 4, which further comprises (C) a polyhydric alcohol partial ester in an amount of 0.1 mass% or more and 5 mass% or less, with respect to the entire amount of the composition.

6. A lubricating oil composition for a shock absorber according to claim 5, wherein the component (C) is pentaerythritol diolate.

7. A lubricating oil composition for a shock absorber according to any of claims 1 to 6, which further comprises (D) a phosphorus-containing compound in an amount of 0.1 mass% or more and 5 mass% or less, with respect to the entire amount of the composition.

8. A lubricating oil composition for a shock absorber according to claim 7, wherein the component (D) is zinc dithiophosphate (ZnDTP).
